# EUROPEAN PATENT APPLICATION

(11) **EP 4 618 266 A1**
(43) Date of publication of application: **17.09.2025**
(21) Application number: 23907699.5
(22) Date of filing: 19.12.2023
(51) Int. Cl.: H01M 50/141, H01M 50/126, H01M 50/122, H01M 50/133, H01M 50/119, H01M 50/105

(54) **POUCH FILM LAMINATE AND SECONDARY BATTERY**

(30) Priority: 19.12.2022 KR 20220178736
(71) Applicant: LG Energy Solution, Ltd., Seoul 07335 (KR)
(72) Inventor: KIM, Gi Woung, Daejeon 34122 (KR); SONG, Dae Woong, Daejeon 34122 (KR); YU, Hyung Kyun, Daejeon 34122 (KR); HWANG, Soo Ji, Daejeon 34122 (KR); KANG, Min Hyeong, Daejeon 34122 (KR); SHIN, Ji Hyun, Daejeon 34122 (KR)
(74) Representative: Plasseraud IP
(86) International application number: PCT/KR2023/021032
(87) International publication number: WO 2024/136416

(57) **Abstract**

A pouch film laminate according to the present invention includes a base layer, a gas barrier layer, and a sealant layer, which are sequentially stacked, wherein the base layer includes a first base layer and a second base layer, and the second base layer is disposed between the first base layer and the gas barrier layer and includes a polyamide-based film and metal oxide particles.

## Description

### TECHNICAL FIELD

This application claims the benefit of Korean Patent Application No. 10-2022-0178736, filed on 12/19/2022, in the Korean Intellectual Property Office, the disclosure of which is incorporated herein in its entirety by reference.

The present invention relates to a pouch film laminate and a secondary battery manufactured by molding the pouch film laminate.

### BACKGROUND ART

In general, secondary batteries are categorized into several different types: nickel-cadmium batteries, nickel-hydrogen batteries, lithium ion batteries, and lithium ion polymer batteries. Such secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

In the manufacture of the secondary batteries, first of all, electrode active material slurry is applied to a positive electrode current collector and a negative electrode current collector to prepare a positive electrode and a negative electrode, and the positive electrode and the negative electrode are stacked on both sides of a separator to form an electrode assembly having a predetermined shape. Subsequently, the electrode assembly is accommodated in a battery case, an electrolyte is injected into the battery case, and the battery case is sealed.

The secondary batteries are classified into pouch type secondary batteries and can type secondary batteries according to a material of a case accommodating an electrode assembly. The pouch type secondary batteries accommodate the electrode assembly in a pouch formed of flexible polymer materials. The can type secondary batteries accommodate the electrode assembly in a case formed of materials such as metal or plastic.

A pouch, which is a case of the pouch type secondary batteries, is prepared by performing press processing on a flexible pouch film laminate to form a cup portion. Once the cup portion is formed, the electrode assembly is accommodated in an inner receiving space of the cup portion and a sealing portion is sealed to manufacture a secondary battery.

In general, the pouch film laminate is formed of a plurality of layers in which a base layer is stacked on one side of a metal gas barrier layer and a sealant layer is stacked on the other side. The base layer included in a typical pouch film laminate is thin, vulnerable to moisture penetration, and absorbs permeated moisture. Accordingly, when sealing the pouch film laminate at a high temperature, the moisture absorbed into the base layer evaporates to generate bubbles, and the base layer is damaged from the generation of bubbles, resulting in degraded insulation properties and formability of the pouch.

### DISCLOSURE OF THE INVENTION

### TECHNICAL PROBLEM

An aspect of the present invention provides a pouch film laminate and a pouch type secondary battery, which are capable of preventing bubbles from being generated by moisture absorbed into a polymer in the base layer and vaporizing when sealing a pouch to suppress damage to the base layer.

### TECHNICAL SOLUTION

According to an aspect of the present invention, provided is a pouch film laminate including a base layer, a gas barrier layer, and a sealant layer, which are sequentially stacked, wherein the base layer includes a first base layer and a second base layer, and the second base layer is disposed between the first base layer and the gas barrier layer and includes a polyamide-based film and metal oxide particles.

The metal oxide particles according to the present invention may include at least one selected from the group consisting of CaO, MnO, SrO, MgO, and ZNo. The metal oxide particles may have an average particle diameter D₅₀ of 0.1 µm to 5 µm.

The second base layer according to the present invention may include the metal oxide particles in an amount of 10 wt% to 70 wt%.

The first base layer may have a thickness of 10 µm to 50 µm. The first base layer may include a polyester-based film. Specifically, the first base layer may include at least one selected from the group consisting of polyethylene terephthalate, polybutylene terephthalate, and polyethylene naphthalate.

The second base layer may have a thickness of 10 µm to 50 µm. The second base layer may include at least one selected from the group consisting of nylon 6, nylon 6,6, nylon MXD6, and nylon 4,10.

The gas barrier layer according to the present invention may include aluminum.

According to another aspect of the present invention, provided is a pouch type secondary battery including a pouch type battery case in which an electrode assembly is accommodated, wherein the pouch type battery case includes a pouch film laminate, the pouch film laminate includes a base layer, a gas barrier layer, and a sealant layer, which are sequentially stacked, the base layer includes a first base layer and a second base layer, and the second base layer is disposed between the first base layer and the gas barrier layer and includes a polyamide-based film and metal oxide particles.

### ADVANTAGEOUS EFFECTS

In the present invention, metal oxide particles are included in a second base layer, and accordingly, metal oxide is hydroxylated before moisture introduced from the outside of a pouch is absorbed into a polymer in a base layer, and the moisture may thus be removed. As a result, even when a pouch film laminate of the present invention is sealed at a high temperature, the generation of bubbles resulting from the evaporation of moisture in the base layer may be suppressed to prevent damage to the base layer and improve the durability and lifetime characteristics of a pouch type secondary battery.

### BRIEF DESCRIPTION OF THE DRAWINGS

FIG. 1 is a cross-sectional view of a pouch film laminate according to the present invention; and
FIG. 2 is an exploded view of a pouch type secondary battery according to the present invention.

### MODE FOR CARRYING OUT THE INVENTION

Advantages and features of the present disclosure and methods of accomplishing the same may be understood more readily by reference to the following detailed description of embodiments and the accompanying drawings. However, the present disclosure may be embodied in different forms, and these embodiments are provided only to make this disclosure thorough and complete and to fully convey the scope of the present disclosure to those skilled in the art, and thus the present disclosure is defined only by the scope of the appended claims. Like reference numerals denote like elements throughout specification.

Unless otherwise defined, all terms (including technical and scientific terms) used herein have the same meaning as commonly understood by one of ordinary skill in the art to which the present invention belongs. Terms as defined in a generally used dictionary are not construed ideally or excessively unless defined apparently and specifically.

Terms used herein are not for limiting the inventive concept but for describing the embodiments. As used herein, the singular forms include the plural forms as well, unless the context clearly indicates otherwise. The meaning of "comprises" and/or "comprising" as used herein does not exclude the presence or addition of one or more other components besides a mentioned component.

Herein, when an element "includes" a component, it may indicate that the element does not exclude another component unless explicitly described to the contrary, but may further include another component.

Herein, the description "A and/or B" refers to A or B, or A and B.

Herein, "%" refers to wt% unless indicated otherwise.

The term "D₅₀" as used herein may be defined as a particle diameter at a cumulative volume of 50% in a particle size distribution curve of particles. For example, the D₅₀ may be measured by using a laser diffraction method. The laser diffraction method generally allows the measurement of a particle diameter ranging from a submicron level to a few mm and may produce highly repeatable and high-resolution results.

### Pouch film laminate

A pouch film laminate according to the present invention includes a base layer, a gas barrier layer, and a sealant layer, which are sequentially stacked, and the base layer includes a first base layer and a second base layer, the second base layer is disposed between the first base layer and the gas barrier layer and includes a polyamide-based film and metal oxide particles, and the sealant layer has a thickness of 50 µm to 120 µm.

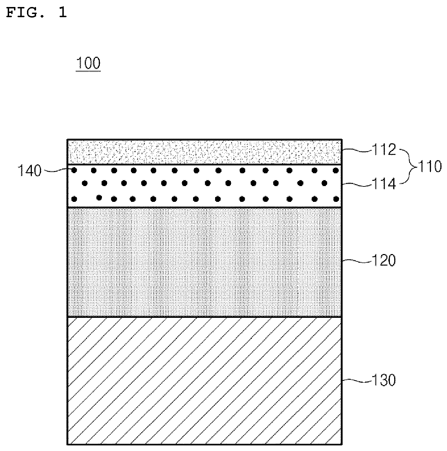

FIG. 1 is a cross-sectional view of a pouch film laminate 100 according to the present invention. Hereinafter, respective components of the pouch film laminate of the present invention will be described in more detail with reference to FIG. 1.

### (1) Base layer

A base layer 110 is formed on an outermost layer of a pouch film laminate 100 to protect a secondary battery against external friction and collision. The base layer 110 is made of a polymer and may thus electrically insulate an electrode assembly from the outside.

The base layer 110 may have a thickness of 5 µm to 100 µm, specifically 7 µm to 70 µm, more specifically 25 µm to 60 µm. When the thickness of the base layer 110 satisfies the above range, external insulation is excellent, and the entire pouch is not thick, and accordingly, energy density to volume of the secondary battery may be excellent.

The base layer 110 according to the present invention may have a composite film structure in which two or more materials are respectively formed as layers. In the composite film structure, an adhesive layer may be additionally formed between respective layers.

Specifically, the base layer 110 according to the present invention may include a first base layer 112 and a second base layer 114. In this case, the first base layer 112 may be a layer disposed on the outermost layer of the pouch film laminate, and the second base layer 114 may be a layer disposed between the first base layer 112 and a gas barrier layer 120. The first base layer 112 and the second base layer 114 may each be formed of materials which are different in quality and/or physical properties. An interface may be present between the first base layer 112 and the second base layer 114. This indicates that the first base layer 112 and the second base layer 114 are different layers and may be formed separately.

Hereinafter, each of the first base layer 112 and the second base layer 114 described above will be described in more detail.

### 1) First base layer

As described above, the first base layer 112 may be a layer disposed on the outermost layer of the pouch film laminate. In this case, the first base layer 112 may serve to prevent moisture from penetrating from the outside of a pouch.

The first base layer 112 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the first base layer 112 may include a polyester-based film having abrasion resistance and heat resistance. For example, the first base layer 112 may include at least one selected from the group consisting of polyethylene terephthalate, polybutylene terephthalate, and polyethylene naphthalate, but is not limited thereto.

The first base layer 112 may have a thickness of 10 µm to 50 µm, specifically 10 µm to 40 µm, more specifically 12 µm to 25 µm. When the thickness of the first base layer 112 satisfies the numerical range described above, moisture penetration into the pouch film laminate may be effectively suppressed and insulation properties and formability of the pouch may be achieved as well. In addition, the entire pouch is not thick, and accordingly, energy density to volume of a secondary battery is excellent.

### 2) Second base layer

As described above, the second base layer 114 may be a layer disposed between the first base layer 112 and the gas barrier layer 120. In this case, the second base layer 114 may serve to improve the formability of the pouch.

The second base layer 114 may include at least one of polyamide-based films such as nylon 6, nylon 6,6, nylon MXD6, and nylon 4,10, but is not limited thereto. Preferably, the second base layer 114 may include nylon 6, and in this case, the benefit is that the formability of the pouch may be improved due to excellent stretching properties of nylon 6.

The second base layer 114 may have a thickness of 10 µm to 50 µm, specifically 10 µm to 40 µm, more specifically 15 µm to 35 µm. When the thickness of the second base layer 114 satisfies the numerical range described above, a reduction in energy density relative to volume of the secondary battery, which results from excessive thickness of the pouch film laminate, may be prevented, and the formability of the pouch may be achieved as well.

Meanwhile, in a typical pouch film laminate, although the first base layer prevents moisture from penetrating from the outside of the pouch, moisture outside the pouch may pass through the first base layer and reach the second base layer due to limitations in the thickness and material. In this case, the moisture may be easily absorbed into the second base layer by forming a hydrogen bond with a functional group (e.g., amide structure) in a polymer included in the second base layer. Accordingly, when the typical pouch film laminate is sealed at a high temperature, the moisture absorbed into the second base layer evaporates and thus bubbles are generated in the second base layer, which causes the base layer to be deformed and damaged, thereby reducing the insulation properties and formability of the pouch.

The present invention solves the issues described above by including metal oxide particles 140 in the second base layer 114. Specifically, the second base layer 114 according to the present invention includes the metal oxide particles 140. In this case, metal oxide is hydroxylated through a reaction with moisture introduced into the second base layer 114, thereby removing moisture in the second base layer 114. As a result, even when a pouch film laminate of the present invention is sealed at a high temperature, the generation of bubbles resulting from evaporation of moisture in the base layer may be suppressed to prevent damage to the base layer and improve the durability and lifetime characteristics of a pouch type secondary battery.

The metal oxide particles 140 may include at least one selected from the group consisting of CaO, MnO, SrO, MgO, and ZNo. Preferably, the metal oxide particles 140 may include at least one of CaO and MgO, which is favorable in the hydroxylation with moisture.

The metal oxide particles 140 included in the second base layer 114 may be included in an amount of 10 wt% to 70 wt%, specifically 15 wt% to 65 wt%, more specifically 20 wt% to 60 wt%, with respect to a total weight of the second base layer 114. When the metal oxide particles 140 in the second base layer 114 are within the numerical range described above, moisture in the second base layer 114 may be easily removed and damage to the second base layer 114 may be minimized.

The metal oxide particles 140 may have an average particle diameter D₅₀ of 0.1 µm to 5 µm, specifically 0.2 µm to 3 µm, more specifically 0.2 µm to 1 µm. When the average particle diameter D₅₀ of the metal oxide particles 140 satisfies the numerical range described above, the metal oxide particles 140 are easily prepared, and the metal oxide particles 140 may be uniformly dispersed in the second base layer 114.

In addition, the second base layer 114 may further include additives other than the metal oxide particles 140 described above. The inclusion of additives in the second base layer 114 may change the physical properties of the second base layer 114. For example, as an additive to control the tensile strength of the second base layer 114, at least any one of carbon fiber, glass fiber, and aramid fiber may be added.

### (2) Gas barrier layer

The gas barrier layer 120 is stacked between a base layer and a sealant layer to secure mechanical strength of a pouch, block the entry and exit of gases or moisture outside a secondary battery, and prevent electrolyte leakage from the inside of a pouch type battery case.

The gas barrier layer 120 may be formed of metal. For example, the gas barrier layer may be a metal thin film containing at least one metal selected from the group consisting of aluminum (Al), copper (Cu), stainless steel (SUS), nickel, titanium, and INVAR, but is not limited thereto.

According to an embodiment of the present invention, the gas barrier layer 120 may be formed of an aluminum alloy thin film. When the gas barrier layer 120 is formed using the aluminum alloy thin film, the gas barrier layer may have a predetermined level of mechanical strength and also be light in weight, and may complement electrochemical properties caused by an electrode assembly and electrolyte and obtain heat dissipation. The aluminum alloy thin film may include metal elements other than aluminum (Al), for example, may include at least one selected from the group consisting of iron (Fe), copper (Cu), chromium (Cr), manganese (Mn), nickel (Ni), magnesium (Mg), silicon (Si), and zinc (Zn).

The gas barrier layer 120 may have a thickness of 40 µm to 100 µm, specifically 50 µm to 90 µm, more specifically 55 µm to 85 µm. When the thickness of the gas barrier layer 120 satisfies the above range, formability and gas barrier performance are excellent when molding a cup portion.

### (3) Sealant layer

The sealant layer 130 is thermally bonded together at a sealing portion when a pouch type battery case accommodating an electrode assembly inside is sealed to completely seal the inside of the pouch type battery case. To this end, the sealant layer 130 may be formed of a material having excellent heat sealing strength.

The sealant layer 130 may be formed of a material having insulation, corrosion resistance, and sealing properties. Specifically, the sealant layer 130 is in direct contact with the electrode assembly and/or electrolyte inside the pouch type battery case, and may thus be formed of a material having insulation and corrosion resistance. In addition, the sealant layer 130 is supposed to completely seal the inside of the pouch type battery case and block material movement between inside and outside, and may thus be formed of a material having high sealing properties (e.g., excellent heat sealing strength). To make sure that such insulation, corrosion resistance, and sealing properties are obtained, the sealant layer 130 may be formed of a polymer material.

The sealant layer 130 may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber, and may preferably be formed of a polyolefin-based resin such as polypropylene (PP) and/or polyethylene (PE). In this case, the polypropylene may be provided with cast polypropylene (CPP), acid modified polypropylene (PPa), polypropylene-ethylene copolymer, and/or polypropylene-butylene-ethylene terpolymer.

The sealant layer 130 may have a thickness of 50 µm to 120 µm, specifically 70 µm to 100 µm. When the thickness of the sealant layer satisfies the above range, there is an effect of both securing the sealing strength of a sealing portion and securing the formability of a pouch film laminate.

Meanwhile, the sealant layer 130 according to the present invention may have a single film structure formed of any one material. Alternatively, the sealant layer 130 may have a composite film structure in which two or more materials are respectively formed as layers. Specifically, the sealant layer 130 may include a first sealant layer and a second sealant layer. In this case, the first sealant layer may be a layer disposed adjacent to the gas barrier layer, and the second sealant layer may be a layer disposed on the first sealant layer. The first sealant layer and the second sealant layer may each be formed of materials which are different in quality and/or physical properties. An interface may be present between the first sealant layer and the second sealant layer. This indicates that the first sealant layer and the second sealant layer are different layers and may be formed separately.

It is particularly preferable that the first sealant layer is formed of acid modified polypropylene (PPa) to obtain long-term adhesion between the gas barrier layer and the first sealant layer. In this case, the acid modified polypropylene may be maleic anhydride polypropylene (MAH PP).

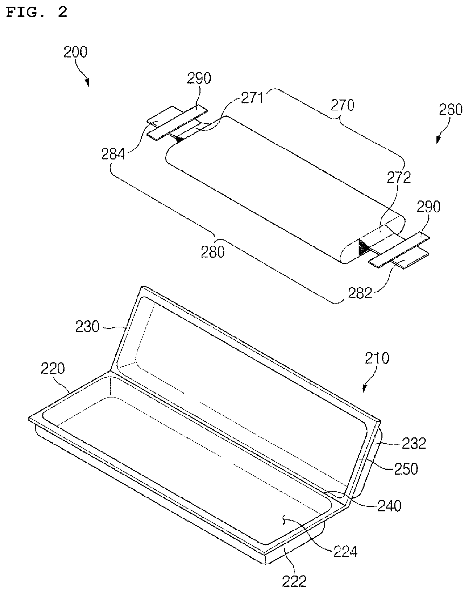

The second sealant layer may be formed of a material having insulation, corrosion resistance, and sealing properties. Specifically, the second sealant layer is in direct contact with an electrode assembly 260 (FIG. 2) and/or an electrolyte inside an accommodation portion 224 (FIG. 2), and may thus be formed of a material having insulation and corrosion resistance. In addition, the second sealant layer is supposed to completely seal the inside of the pouch type battery case and block material movement between inside and outside of the pouch type battery case, and may thus be formed of a material having high sealing properties. To obtain insulation, corrosion resistance, and sealing properties, the second sealant layer may be formed of at least one material selected from the group consisting of polyethylene, polypropylene, polycarbonate, polyethylene terephthalate, polyvinyl chloride, acrylic polymer, polyacrylonitrile, polyimide, polyamide, cellulose, aramid, nylon, polyester, polyparaphenylene benzobisoxazole, polyarylate, teflon, and glass fiber. Preferably, the second sealant layer may be formed of a polyolefin-based resin such as polypropylene (PP) and/or polyethylene (PE). In this case, the polypropylene may be provided with cast polypropylene, acid modified polypropylene, polypropylene-ethylene copolymer, and/or polypropylene-butylene-ethylene terpolymer. In this case, the acid modified polypropylene may be maleic anhydride polypropylene (MAH PP). More preferably, the second sealant layer may include cast polypropylene (CPP), which has heat sealability and high tensile strength.

**Pouch type secondary battery**

Next, a pouch type secondary battery according to the present invention will be described.

A pouch type secondary battery according to the present invention includes a pouch type battery case in which an electrode assembly is accommodated, wherein the pouch type battery case includes a pouch film laminate, the pouch film laminate includes a base layer, a gas barrier layer, and a sealant layer, which are sequentially stacked, the base layer includes a first base layer and a second base layer, and the second base layer is disposed between the first base layer and the gas barrier layer and includes a polyamide-based film and metal oxide particles.

Hereinafter, respective components of the pouch type secondary battery of the present invention will be described in more detail with reference to FIG. 2.

FIG. 2 is an exploded view of a pouch type secondary battery 200 according to the present invention. As shown in FIGS. 2, the pouch type secondary battery 200 of the present invention may include a pouch type battery case 210, an electrode assembly 260, an electrode lead 280, an insulation portion 290, and an electrolyte (not shown).

### (1) Pouch type battery case

The pouch type battery case 210 may store the electrode assembly 260 inside. The pouch type battery case 210 may be manufactured by molding the pouch film laminate of the present invention described above. The detailed components and physical properties of the pouch film laminate are the same as described above, and thus detailed descriptions are not provided.

The pouch film laminate may be drawn, molded, or stretched by a punch or the like to manufacture the pouch type battery case 210. Accordingly, the pouch type battery case 210 may include a cup portion 222 and an accommodation portion 224. The accommodation portion 224 is a place to store the electrode assembly, and may indicate a receiving space formed in the shape of a pocket inside the cup portion 222 as the cup portion 222 is formed.

According to an embodiment of the present invention, the pouch type battery case 210 may include a first case 220 and a second case 230 as shown in FIG. 2. The first case 220 may include an accommodation portion 224 capable of accommodating the electrode assembly 260, and the second case 230 may cover the accommodation portion 224 from above to prevent the electrode assembly 260 from being separated to the outside of the battery case 210. The first case 220 and the second case 230 may be manufactured in a way that one side of the first case 220 and one side of the second case 230 may be connected as shown in FIG. 2, but the embodiment of the present invention is not limited thereto, and the first case 220 and the second case 230 may be diversely manufactured, for example, individually manufactured by being separated from each other.

According to another embodiment of the present invention, when forming a cup portion in a pouch film laminate, two symmetrical cup portions 222 and 232 may be drawn and molded adjacent to each other in one pouch film laminate. In this case, the cup portions 222 and 232 may be formed in the first case 220 and the second case 230, respectively, as shown in FIG. 2. After accommodating the electrode assembly 260 in the accommodation portion 224 provided in the cup portion 222 of the first case 220, a bridge portion 240 formed between the two cup portions 222 and 232 may be folded such that the two cup portions 222 and 232 face each other. In this case, the cup portion 232 of the second case 230 may accommodate the electrode assembly 260 from above. Accordingly, the two cup portions 222 and 232 accommodate one electrode assembly 260, and thus an electrode assembly 260 that is thicker than when there is only one cup portion 222 may be accommodated. In addition, one edge of the secondary battery 200 is formed by folding the pouch type battery case 210, and accordingly, the number of edges to be sealed may be reduced when a sealing process is performed later. Accordingly, process speed of the pouch type secondary battery 200 may be improved and the number of sealing processes may be reduced.

The pouch type battery case 210 may be sealed while accommodating the electrode assembly 260 so that a portion of an electrode lead 280, which will be described later, i.e., a terminal portion, is exposed. Specifically, when the electrode lead 280 is connected to an electrode tab 270 of the electrode assembly 260 and an insulation portion 290 is formed on a portion of the electrode lead 280, the electrode assembly 260 may be accommodated in the accommodation portion 224 provided in the cup portion 222 of the first case 220, and the second case 230 may cover the accommodation portion 224 from above. Then, an electrolyte is injected into the accommodation portion 224 and the sealing portion 250 formed on an edge of the first case 220 and the second case 230 may be sealed.

The sealing portion 250 may serve to seal the accommodation portion 224. Specifically, the sealing portion 250 may be formed along an edge of the accommodation portion 224 and may thus seal the accommodation portion 224. The temperature at which the sealing portion 250 is sealed may be 180 °C to 250 °C, specifically 200 °C to 250 °C, more specifically 210 °C to 240 °C. When the sealing temperature satisfies the numerical range described above, the pouch type battery case 210 may obtain sufficient sealing strength through heat sealing.

According to the present invention, when the sealant layers of the first case 220 and the second case 230 are stacked in contact with each other and then sealed for 1.6 seconds at 210 °C and 1.2 MPa, a thickness of the sealant layer of the sealing portion 250 formed in the pouch type battery case 210 may be 54% to 86%, specifically 55% to 85%, more specifically 60% to 85% of a thickness of the sealant layer of the pouch film laminate. When the thickness of the sealant layer of the sealing portion 250 satisfies the numerical range described above compared to the thickness of the sealant layer of the pouch film laminate, there is an effect of maintaining insulation properties while obtaining sufficient sealing strength.

### (2) Electrode assembly

The electrode assembly 260 may be inserted into the pouch type battery case 210 and sealed through the pouch type battery case 210 after electrolyte injection.

A positive electrode, a separator, and a negative electrode may be sequentially stacked to form the electrode assembly 260. Specifically, the electrode assembly 260 may include two types of electrodes, which are a positive electrode and a negative electrode, and a separator sandwiched between the electrodes to insulate the electrodes from each other.

The positive electrode and the negative electrode may have a structure in which an active material slurry is applied to an electrode current collector in the form of a metal foil or metal mesh containing aluminum and copper, respectively. Typically, granular active materials, auxiliary conductors, binders, and conductive materials are stirred with a solvent added to form a slurry. The solvent may be removed in subsequent processing.

A slurry mixed with an electrode active material, a binder, and/or a conductive material is applied to a positive electrode current collector and a negative electrode current collector to manufacture a positive electrode and a negative electrode, and the positive electrode and the negative electrode are stacked on both sides of the separator, and accordingly, the electrode assembly 260 may be manufactured into a predetermined shape. Types of the electrode assembly 260 may include a stack type, a jelly roll type, and a stack and folding type, but are not limited thereto.

The electrode assembly 260 may include an electrode tab 270.

The electrode tab 270 is connected to each of the positive electrode and the negative electrode of the electrode assembly 260 and protrudes outward from the electrode assembly 260, and may thus serve as a path through which electrons move between the inside and the outside of the electrode assembly 260. A current collector included in the electrode assembly 260 may be provided with a portion to which an electrode active material is applied, and an end portion to which an electrode active material is not applied, that is, a non-coating portion. The electrode tab 270 may be formed by cutting the non-coating portion or formed by connecting a separate conductive member to the non-coating portion through ultrasonic welding or the like. As shown in FIG. 2, the electrode tab 270 may protrude in different directions from the electrode assembly 260, but is not limited thereto, and may be formed to protrude in various directions, such as protruding from one side in the same direction.

### (3) Electrode lead

The electrode lead 280 may supply electricity to the outside of the secondary battery 200. The electrode lead 280 may be connected to the electrode tab 270 of the electrode assembly 260 through spot welding, or the like.

The electrode lead 280 may be connected to the electrode assembly 260 and may protrude to the outside of the pouch type battery case 210 via the sealing portion 250. Specifically, one end of the electrode lead 280 may be connected to the electrode assembly 260, particularly to the electrode tab 270, and the other end of the electrode lead 280 may protrude to the outside of the pouch type battery case 210.

The electrode lead 280 may include a positive electrode lead 282 with one end connected to the positive electrode tab 272 and extending in a direction in which the positive electrode tab 272 protrudes, and a negative electrode lead 284 with one end connected to the negative electrode tab 274 and extending in a direction in which the negative electrode tab 274 protrudes. The other ends of both the positive lead 282 and the negative lead 284 may protrude to the outside of the battery case 210. Accordingly, electricity generated inside the electrode assembly 260 may be supplied to the outside. In addition, the positive electrode tab 272 and the negative electrode tab 274 are each formed to protrude in various directions, and accordingly, the positive electrode lead 282 and the negative electrode lead 284 may also extend in various directions. The positive electrode lead 282 and the negative electrode lead 284 may be made of materials different from each other. That is, the positive electrode lead 282 may be made of the same aluminum (Al) material as a positive electrode current collector, and the negative electrode lead 284 may be made of the same copper (Cu) or nickel (Ni)-coated copper material as a negative electrode current collector. A portion of the electrode lead 280 protruding to the outside of the battery case 210 may serve as a terminal portion and be electrically connected to an external terminal.

### (4) Insulation portion

The insulation portion 290 may prevent electricity generated from the electrode assembly 260 from flowing to the battery case 210 through the electrode lead 280, and allow the sealing of the battery case 210 to be maintained. To this end, the insulation portion 290 may be formed of a non-conductor having non-conductive properties in which electricity does not flow well. In general, as the insulation portion 290, relatively thin insulation tape or film easily attached to the electrode lead 280 is widely used, but the embodiment of the present invention is not limited thereto, and thus any member capable of insulating the electrode lead 280 may be used.

The insulation portion 290 may be disposed to surround an outer circumferential surface of the electrode lead 280. Specifically, at least a portion of the electrode lead 280 may be surrounded by the insulation portion 290. In this case, the insulation portion 290 may be disposed between the electrode lead 280 and the pouch type battery case 210. The insulation portion 290 may be placed to be limited within the sealing portion 250 in which the first case 220 and the second case 230 of the pouch type battery case 210 are thermally fused, and may make the electrode lead 280 adhere to the battery case 210.

### (5) Electrolyte

The pouch type secondary battery 200 according to the present invention may further include an electrolyte (not shown) injected into the pouch type battery case 210. The electrolyte is used to move lithium ions generated through electrochemical reactions of an electrode upon charging/discharging of the secondary battery 200 and may include a non-aqueous organic electrolyte solution that is a mixture of lithium salt and an organic solvent, or a polymer using a polymer electrolyte. In addition, the electrolyte may include a sulfide-based solid electrolyte, an oxide-based solid electrolyte, or a polymer-based solid electrolyte, and such solid electrolyte may have flexibility, and thus be easily deformed under external force.

Hereinafter, the present invention will be described in more detail through specific embodiments. however, Examples shown below are illustrated only for the understanding of the present invention, and the scope of the inventive concept is not limited thereto. It will be apparent to those skilled in the art that various modifications and alterations are possible within the scope and technical range of the present invention, and such modifications and alterations fall within the scope of claims included herein.

### Examples and Comparative Examples

**Example 1**

### (1) Preparation of pouch film laminate

A nylon film having a width of 266 mm, a length of 50 m, and a thickness of 25 µm, and containing CaO particles in an amount of 15 wt% (average particle diameter D50: 0.5 µm) with respect to a total weight of the nylon film was prepared.

A first adhesive film having a width of 266 mm, a length of 50 m, and a thickness of 3 µm, the nylon film, a second adhesive film having a width of 266 mm, a length of 50 m, and a thickness of 3 µm, and a polyethylene terephthalate (PET) film having a width of 266 mm, a length of 50 m, and a thickness of 12 µm were sequentially stacked on one side of an aluminum alloy thin film having a width of 266 mm, a length of 50 m, and a thickness of 60 µm. A polymer film containing polypropylene having a width of 266 mm, a length of 50 m, and a thickness of 80 µm was stacked on the other side of the aluminum alloy thin film. As a result, a pouch film laminate having a structure in which the polymer film containing polypropylene, the aluminum alloy thin film, the first adhesive film/the nylon film, the second adhesive film, and the polyethylene terephthalate film were sequentially stacked was prepared.

In this case, the polymer film containing polypropylene is a sealant layer, the aluminum alloy thin film is a gas barrier layer, and the first adhesive film, the nylon film, the second adhesive film, and the polyethylene terephthalate film are base layers.

### (2) Preparation of pouch type battery case

The pouch film laminate prepared through the method described above was cut to 266 mm in width and 200 mm in length, then folded in half to a size of 133 mm × 200 mm such that the sealant layer was in contact, and then sealed at the ends of the long sides (200 mm) in the following two conditions to prepare pouch type battery cases each having a sealing portion formed therein.

Sealing for 1.8 seconds at 210 °C and 0.1 MPa with a seal bar area of 200 mm × 8 mm

Sealing for 1.8 seconds at 230 °C and 0.75 MPa with a seal bar area of 200 mm × 8 mm

### Example 2

A pouch film laminate was prepared in the same manner as in Example 1, except that the nylon film contained CaO particles in an amount of 30 wt% with respect to the total weight of the nylon film.

A pouch type battery case was prepared in the same manner as in Example 1, except that the pouch film laminate prepared through the method described above was used.

### Example 3

A pouch film laminate was prepared in the same manner as in Example 1, except that the nylon film contained CaO particles in an amount of 50 wt% with respect to the total weight of the nylon film.

A pouch type battery case was prepared in the same manner as in Example 1, except that the pouch film laminate prepared through the method described above was used.

### Example 4

A pouch film laminate was prepared in the same manner as in Example 1, except that the nylon film contained CaO particles in an amount of 65 wt% with respect to the total weight of the nylon film.

A pouch type battery case was prepared in the same manner as in Example 1, except that the pouch film laminate prepared through the method described above was used.

### Example 5

A pouch film laminate was prepared in the same manner as in Example 1, except that a polymer film containing polypropylene having a thickness of 50 µm was stacked as a sealant layer.

A pouch type battery case was prepared in the same manner as in Example 1, except that the pouch film laminate prepared through the method described above was used.

### Comparative Example 1

A pouch film laminate was prepared in the same manner as in Example 1, except that the nylon film contained no CaO particles.

A pouch type battery case was prepared in the same manner as in Example 1, except that the pouch film laminate prepared through the method described above was used.

### Comparative Example 2

A pouch film laminate was prepared in the same manner as in Example 1, except that a nylon film containing no CaO particles and a polyethylene terephthalate film containing CaO particles in an amount of 15 wt% (average particle diameter D₅₀: 0.5 µm) with respect to the total weight of the polyethylene terephthalate film.

A pouch type battery case was prepared in the same manner as in Example 1, except that the pouch film laminate prepared through the method described above was used.

### Experimental Example 1: Evaluation of the presence of bubbles in sealing portions

It was visually determined whether sealing portions of pouch type cases prepared in Examples 1 to 5 and Comparative Examples 1 and 2 were deformed due to bubbles being generated in the sealing portions. The results are shown in Table 1 below.
∘: bubbles are generated and the sealing portion is deformed.
×: No bubbles are generated and the sealing portion is not deformed.

**[Table 1]**

| | Sealing portion deformation resulting from generation of bubbles | | |
|---|---|---|---|
| | Sealing for 1.8 seconds at 210 °C and 0.1 MPa | Sealing for 1.8 seconds at 230 °C and 0.75 MPa | Sealing for 1.8 seconds at 230 °C and 0.75 MPa (sealing after leaving for 1 hour at 60 °C, 90% RH) |
| Example 1 | × | × | × |
| Example 2 | × | × | × |
| Example 3 | × | × | × |
| Example 4 | × | × | × |
| Example 5 | × | × | × |
| Comparative Example 1 | × | ○ | ○ |
| Comparative Example 2 | × | × | ○ |

According to Table 1, it is seen that, unlike Comparative Example 1, Examples 1 to 5 in which metal oxide particles were included in a second base layer, even when sealed at 230 °C, showed no bubbles in sealing portions of pouch type cases and no deformation of the sealing portions.

Meanwhile, Comparative Example 2 in which metal oxide particles were included in a first base layer instead of a second base layer, even when sealed at a typical temperature condition of 230 °C, showed, no bubbles in sealing portions of pouch type cases, but when left at 60 °C, 90% RH for 1 hour and then sealed at 230 °C, showed bubbles in sealing portions of pouch type cases, causing deformation of the sealing portions. This is believed to be because, when the metal oxide particles are included in the outermost of the first base layer, the metal oxide particles react quickly with moisture, thereby no effect of removing moisture in the base layer.

### Description of Symbols

- 100:: Pouch film laminate
- 110:: Base layer
- 112:: First base layer
- 114:: Second base layer
- 120:: Gas barrier layer
- 130:: Sealant layer
- 140:: Metal oxide particles
- 200:: Pouch type secondary battery
- 210:: Pouch type case
- 220:: First case
- 222:: Cup portion
- 224:: Accommodation portion
- 230:: Second case
- 232:: Cup portion
- 240:: Bridge portion
- 250:: Sealing portion
- 260:: Electrode assembly
- 270:: Electrode tab
- 272:: Positive electrode tab
- 274:: Negative electrode tab
- 280:: Electrode lead
- 282:: Positive electrode lead
- 284:: Negative electrode lead
- 290:: Insulation portion

## Claims

1. A pouch film laminate comprising a base layer, a gas barrier layer, and a sealant layer, which are sequentially stacked,
wherein the base layer comprises a first base layer and a second base layer, and
the second base layer is disposed between the first base layer and the gas barrier layer and comprises a polyamide-based film and metal oxide particles.

2. The pouch film laminate of claim 1, wherein the metal oxide particles comprise at least one selected from the group consisting of CaO, MnO, SrO, MgO, and ZnO.

3. The pouch film laminate of claim 1, wherein the metal oxide particles have an average particle diameter D₅₀ of 0.1 µm to 5 µm.

4. The pouch film laminate of claim 1, wherein the second base layer comprises the metal oxide particles in an amount of 10 wt% to 70 wt%.

5. The pouch film laminate of claim 1, wherein the first base layer has a thickness of 10 µm to 50 µm.

6. The pouch film laminate of claim 1, wherein the first base layer comprises a polyester-based film.

7. The pouch film laminate of claim 1, wherein the first base layer comprises at least one selected from the group consisting of polyethylene terephthalate, polybutylene terephthalate, and polyethylene naphthalate.

8. The pouch film laminate of claim 1, wherein the second base layer has a thickness of 10 µm to 50 µm.

9. The pouch film laminate of claim 1, wherein the sealant layer comprises a first sealant layer and a second sealant layer.

10. The pouch film laminate of claim 1, wherein the second base layer comprises at least one selected from the group consisting of nylon 6, nylon 6,6, nylon MXD6, and nylon 4,10.

11. The pouch film laminate of claim 1, wherein the gas barrier layer comprises aluminum.

12. A pouch type secondary battery comprising a pouch type battery case in which an electrode assembly is accommodated,
wherein the pouch type battery case comprises a pouch film laminate,
the pouch film laminate comprises a base layer, a gas barrier layer, and a sealant layer, which are sequentially stacked,
the base layer comprises a first base layer and a second base layer, and
the second base layer is disposed between the first base layer and the gas barrier layer and comprises a polyamide-based film and metal oxide particles.
